# EUROPÄISCHE PATENTSCHRIFT

(11) **EP 2 860 347 B1**
(45) Veröffentlichungstag und Bekanntmachung des Hinweises auf die Patenterteilung: **12.04.2017**
(21) Anmeldenummer: 13187637.7
(22) Anmeldetag: 08.10.2013
(51) Int. Cl.: F04D 29/18, F04D 29/32, F04D 29/40, F01D 5/16

(54) **Gasturbinen-Verdichter-Schaufelgitter**
Gas turbine compressor cascade
Grille d'aube de compresseur de turbines à gaz

(43) Veröffentlichungstag der Anmeldung: 15.04.2015
(73) Patentinhaber: MTU Aero Engines AG, 80995 München (DE)
(72) Erfinder: Schönenborn, Harald, 85757 Karlsfeld (DE)

(56) Entgegenhaltungen:
- EP-A2- 2 072 758
- WO-A1-2006/084438
- DE-A1-102009 053 247
- US-A1- 2008 145 228

## Beschreibung

Die vorliegende Erfindung betrifft ein Schaufelgitter für einen Verdichter einer Gasturbine sowie eine Gasturbine, insbesondere Flugtriebwerk-Gasturbine, mit einer Verdichterstufe mit einem solchen Schaufelgitter und ein Verfahren zum Auslegen eines solchen Schaufelgitters.

Aus der EP 1 211 382 A2 ist es bekannt, dass bei Verdichtern Flattern auftreten kann. Um dieses zu reduzieren, schlägt die EP 1 211 382 A2 Laufschaufeln mit unterschiedlichen Eigenfrequenzen vor.

Neben einer solchen strukturellen Verstimmung ist es aus der US 2010/0247310 A1 auch bekannt, die Laufschaufeln mit unterschiedlichen Dicken auf der Druckseite vorzusehen und somit zu verstimmen.

Beide Druckschriften befassen sich mit der normalen Durchströmung des Verdichters, d.h. einem Anströmen der Schaufel-Vorderkanten. Beim sogenannten Pumpen kann sich jedoch die Durchströmungsrichtung kurzzeitig umkehren. Auch hierbei kann Flattern auftreten.

Aus der US 2008/145228 A1 ist ein Laufschaufelgitter einer Turbomaschine zum Reduzieren eines stoßinduzierten Flatterns der Laufschaufeln bekannt.

Aus der DE 10 2009 053247 A1 ist ein Verfahren zum Verändern einer Eigenfrequenz einer Schaufel für eine Strömungsmaschine bekannt.

Eine Aufgabe einer Ausführung der vorliegenden Erfindung ist es, eine Gasturbine zu verbessern.

Diese Aufgabe wird durch ein Schaufelgitter mit den Merkmalen des Anspruchs 1 gelöst. Ansprüche 8, 9 stellen eine Gasturbine mit einem entsprechenden Schaufelgitter bzw. ein Verfahren zum Auslegen eines entsprechenden Schaufelgitters unter Schutz. Vorteilhafte Ausführungsformen der Erfindung sind Gegenstand der Unteransprüche.

Nach einem Aspekt der vorliegenden Erfindung weist eine Gasturbine, insbesondere eine Flugtriebwerk-Gasturbine, eine oder mehrere Verdichterstufen auf, vorzugsweise Hochdruckverdichterstufen, die einer oder mehreren Niederdruckverdichterstufen nachgeschaltet bzw. -ordnet sind.

Wenigstens eine, vorzugsweise alle (Hochdruck) Verdichterstufen weisen jeweils ein Schaufelgitter mit einer oder mehreren ersten Schaufeln und einer oder mehreren hiervon verschiedenen zweiten Schaufeln auf. Das Schaufelgitter kann in einer Ausführung ein im Betrieb in Umfangsrichtung rotierendes Laufgitter sein. Diesem kann in einer Weiterbildung ein, insbesondere feststehendes, Leitgitter nachgeschaltet bzw. -ordnet sein. Gleichermaßen kann das Schaufelgitter in einer Ausführung ein Leitgitter sein. Die Schaufeln des Schaufelgitters, insbesondere erste und zweite Schaufeln, können somit insbesondere Lauf- oder Leitschaufeln sein.

Eine erste Schaufel, insbesondere Lauf- oder Leitschaufel, kann in Umfangsrichtung ein- oder beidseitig einer zweiten Schaufel, insbesondere Lauf- bzw. Leitschaufel, benachbart sein. Insbesondere können erste und zweite Schaufeln also alternierend angeordnet sein. Gleichermaßen können zwischen erster/n und zweiter/n Schaufel(n) dritte und gegebenenfalls weitere Schaufeln, insbesondere Lauf- bzw. Leitschaufeln angeordnet sein. Das Schaufelgitter kann also insbesondere eine oder mehrere Gruppen erster, zweiter, dritter (und gegebenenfalls wieder zweiter) Schaufeln, insbesondere Lauf- oder Leitschaufeln aufweisen, insbesondere hieraus bestehen.

Erste und zweite Schaufel(n) weisen jeweils eine einem Gasturbineneintritt zugewandte (Schaufelblatt)Vorderkante, eine dem Gasturbineneintritt abgewandte (Schaufelblatt)Hinterkante, eine diese verbindende, in Betriebsrotationsrichtung vordere (Schaufelblatt)Druckseite, eine dieser gegenüberliegende (Schaufelblatt)Saugseite und längs einer Fädelachse aufeinanderfolgende Profilsehnen auf, die sich jeweils zwischen einem rotorzu- oder -abgewandten Schaufel(blatt)fuß und einer rotorab- bzw. -zugewandten Schaufel(blatt)spitze erstrecken. Die Schaufel(blatt)spitze kann freistehen oder mit einem Deckband verbunden sein. Insbesondere, wenn das Schaufelgitter ein Laufgitter bzw. die Schaufeln Laufschaufeln sind, sind in einer Ausführung der Schaufel(blatt)fuß bzw. die Schaufel(blatt)füße im Sinne der vorliegenden Erfindung rotorzugewandt und die Schaufel(blatt)spitze(n) im Sinne der vorliegenden Erfindung rotorabgewandt.

Entsprechend sind insbesondere, wenn das Schaufelgitter ein Leitgitter bzw. die Schaufeln Leitschaufeln sind, in einer Ausführung der Schaufel(blatt)fuß bzw. die Schaufel(blatt)füße im Sinne der vorliegenden Erfindung rotorabgewandt und die Schaufel(blatt)spitze(n) im Sinne der vorliegenden Erfindung rotorzugewandt. Gleichermaßen können jedoch auch, wenn das Schaufelgitter ein Leitgitter bzw. die Schaufeln Leitschaufeln sind, in einer Ausführung der Schaufel(blatt)fuß bzw. die Schaufel(blatt)füße im Sinne der vorliegenden Erfindung rotorzugewandt und die Schaufel(blatt)spitze im Sinne der vorliegenden Erfindung rotorzugewandt sein. Nach einem Aspekt der vorliegenden Erfindung wird bzw. ist bzw. werden bzw. sind die Hinterkante(n) der ersten Schaufel(n) in einer schaufelspitzenzugewandten Hälfte gegenüber der Hinterkante der zweiten Schaufel bzw. den Hinterkanten der zweiten Schaufeln über die gesamte schaufelspitzenzugewandte Hälfte oder in einem oder mehreren Abschnitten hiervon axial zur Vorderkante hin versetzt.

Nach einem weiteren Aspekt der vorliegenden Erfindung weist das Schaufelgitter eine oder mehrere dritte Schaufeln auf, deren Hinterkante(n) gegenüber den Hinterkanten der ersten und zweiten Schaufel(n) ebenfalls über die gesamte schaufelspitzenzugewandte Hälfte oder in einem oder mehreren Abschnitten hiervon axial zur Vorderkante hin versetzt ist bzw. sind.

Somit werden in einer Ausführung Schaufeln aerodynamisch für ein Pumpen bzw. eine, insbesondere kurzzeitige und/oder an sich unerwünschte, Rückströmung bzw. Anströmung der Hinter- anstelle der Vorderkanten des Schaufelgitters derart verstimmt, dass ein Flattern beim Pumpen reduziert, vorzugsweise vermieden wird. Da der Staupunkt beim Pumpen im oberen Schaufelblattbereich nahe der Hinterkante auftritt, kann durch die erfindungsgemäße Variation der Hinterkanten zwischen ersten und zweiten (und gegebenenfalls dritten und eventuell weiteren) Schaufeln das Flattern beim Pumpen reduziert, vorzugsweise vermieden werden.

In einer Ausführung wird bzw. ist bzw. werden bzw. sind die Hinterkante(n) der ersten Schaufel(n) in einem schaufelspitzenzugewandten Drittel, insbesondere Viertel, gegenüber der Hinterkante der zweiten Schaufel bzw. den Hinterkanten der Schaufeln über das gesamte schaufelspitzenzugewandte Drittel bzw. Viertel oder in einem oder mehreren Abschnitten hiervon axial zur Vorderkante hin versetzt.

Sofern das Schaufelgitter eine oder mehrere dritte Schaufeln aufweist, kann bzw. können deren Hinterkante(n) gegenüber den Hinterkanten der ersten und/oder zweiten Schaufel(n) ebenfalls über das gesamte schaufelspitzenzugewandte Drittel bzw. Viertel oder in einem oder mehreren Abschnitten hiervon axial zur Vorderkante hin versetzt sein bzw. werden.

Die Hinterkante(n) wird bzw. ist bzw. werden bzw. sind in einer Ausführung nur in der schaufelspitzenzugewandten Hälfte, insbesondere nur dem schaufelspitzenzugewandten Drittel bzw. Viertel, versetzt, und in der anderen, schaufelspitzenabgewandten Hälfte bzw. den zwei schaufelspitzenabgewandten Dritteln bzw. drei schaufelspitzenabgewandten Vierteln, wenigstens im Wesentlichen, gleich. In einer anderen Ausführung wird bzw. ist bzw. werden bzw. sind die Hinterkante(n) auch über die gesamte schaufelspitzenabgewandte Hälfte oder in einem oder mehreren Abschnitten hiervon axial zur Vorderkante hin versetzt.

Hierdurch wird die Aerodynamik des Schaufelgitters bei normaler Vorwärtsdurchströmung vorteilhaft wenig beeinträchtigt.

Die vorstehenden Bereichsangaben Hälfte, Drittel bzw. Viertel beziehen sich insbesondere auf eine Schaufelblatthöhe zwischen Schaufelblattfuß und Schaufelblattspitze und bezeichnen entsprechend insbesondere den radialen Bereich zwischen 50% (Hälfte), 67% (Drittel) bzw. 75% (Viertel) und 100% einer radialen Schaufelblatthöhe zwischen Schaufelblattfuß und Schaufelblattspitze der Schaufel, gemessen von einer Rotorachse aus oder zu einer Rotorachse hin.

In einer Ausführung wird bzw. ist bzw. werden bzw. sind die Hinterkante(n) der ersten Schaufel(n) gegenüber der Hinterkante der zweiten Schaufel bzw. den Hinterkanten der zweiten Schaufeln über die gesamte schaufelspitzenzugewandte Hälfte, insbesondere das gesamte schaufelspitzenzugewandte Drittel bzw. Viertel, oder in einem oder mehreren Abschnitten hiervon um wenigstens 0,5%, insbesondere wenigstens 1% einer Profilsehnenlänge der ersten oder zweiten Schaufel(n) zwischen Vorder- und Hinterkante axial zur Vorderkante hin versetzt. Zusätzlich oder alternativ kann der axiale Versatz in einer Ausführung höchstens 15%, insbesondere höchstens 10% der Profilsehnenlänge betragen.

Sofern das Schaufelgitter eine oder mehrere dritte Schaufeln aufweist, kann bzw. können deren Hinterkante(n) gegenüber den Hinterkanten der ersten und/oder zweiten Schaufel(n) ebenfalls über die gesamte schaufelspitzenzugewandte Hälfte, insbesondere das gesamte schaufelspitzenzugewandte Drittel bzw. Viertel, oder in einem oder mehreren Abschnitten hiervon um wenigstens 0,5%, insbesondere wenigstens 1%, und/oder höchstens 15%, insbesondere höchstens 10% der Profilsehnenlänge der ersten, zweiten oder dritten Schaufel(n) axial zur Vorderkante hin versetzt sein bzw. werden.

Unter einer Profilsehnenlänge wird vorliegend insbesondere der Abstand zwischen Vorder- und Hinterkante auf der entsprechenden radialen Höhe verstanden, insbesondere die Länge der Strecke zwischen Vorder- und Hinterkante oder der axiale Abstand zwischen Vorder- und Hinterkante.

Hierdurch wird die Aerodynamik des Schaufelgitters bei normaler Vorwärtsdurchströmung vorteilhaft wenig beeinträchtigt und gleichermaßen ein Flattern beim Pumpen reduziert, vorzugsweise vermieden.

In einer Ausführung wird bzw. ist bzw. werden bzw. sind die Hinterkante(n) der ersten Schaufel(n) gegenüber der Hinterkante der zweiten Schaufel bzw. den Hinterkanten der zweiten Schaufeln über die gesamte schaufelspitzenzugewandte Hälfte, insbesondere das gesamte schaufelspitzenzugewandte Drittel bzw. Viertel, insbesondere monoton, vorzugsweise streng monoton, zunehmend versetzt. Mit anderen Worten nimmt der axiale Versatz vom Schaufelblattfuß zur Schaufelblattspitze hin zu, insbesondere ohne eine abschnittsweise gegenläufige Abnahme (monoton), insbesondere ohne eine abschnittsweise zur radialen Richtung parallele Hinterkante (streng monoton).

Hierdurch kann eine vorteilhafte Aerodynamik, insbesondere beim normalen Durch- und/oder einem gegensinnigen Rückströmen, dargestellt werden.

Zusätzlich zu der vorstehend erläuterten aerodynamischen Verstimmung für ein Pumpen durch Variation der Hinterkanten können erste und zweite (und gegebenenfalls dritte und eventuell weitere) Schaufeln auch strukturell gegeneinander verstimmt werden bzw. sein.

Insbesondere können die erste(n) und zweite(n) (und gegebenenfalls dritte(n)) Schaufel(n) unterschiedliche Eigenfrequenzen aufweisen. Dies kann in einer Weiterbildung durch Variation der Steifigkeit, Massenverteilung und/oder der Flächenträgheitsmomente realisiert sein. Die unterschiedlichen Eigenfrequenzen können insbesondere Biege- und/oder Torsions-Eigenfrequenzen und/oder erste, zweite und/oder höhere Eigenfrequenzen sein, insbesondere also unterschiedliche erste, zweite und/oder höhere Biege- und/oder Torsions-Eigenfrequenzen. Die unterschiedlichen Eigenfrequenzen unterscheiden sich in einer Ausführung um wenigstens 1%, insbesondere wenigstens 2%, und/oder höchstens 20%, insbesondere höchstens 7%.

Insbesondere hierdurch kann die vorstehend erläuterte aerodynamische Verstimmung durch eine strukturelle Verstimmung verstärkt werden.

In einer Ausführung wird durch den Rückschnitt der Hinterkante(n) der ersten Schaufel(n) deren aerodynamische Belastung beim Pumpen reduziert. Somit kann bzw. können in einer Weiterbildung die erste(n) Schaufel(n), insbesondere wenigstens in einer hinterkanten- und schaufelspitzenzugewandten Hälfte, eine andere, insbesondere geringere, Biege- und/oder Torsionssteifigkeit aufweisen als die zweite(n) Schaufel(n).

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: Schaufelblätter von Schaufeln eines Schaufelgitters eines Verdichters einer Flugtriebwerk-Gasturbine nach einer Ausführung der vorliegenden Erfindung in einer perspektivischen Ansicht entgegen einer Umfangs- bzw. Rotationsrichtung; und
- Fig. 2: einen Schnitt längs der Linie II-II in Fig. 1.

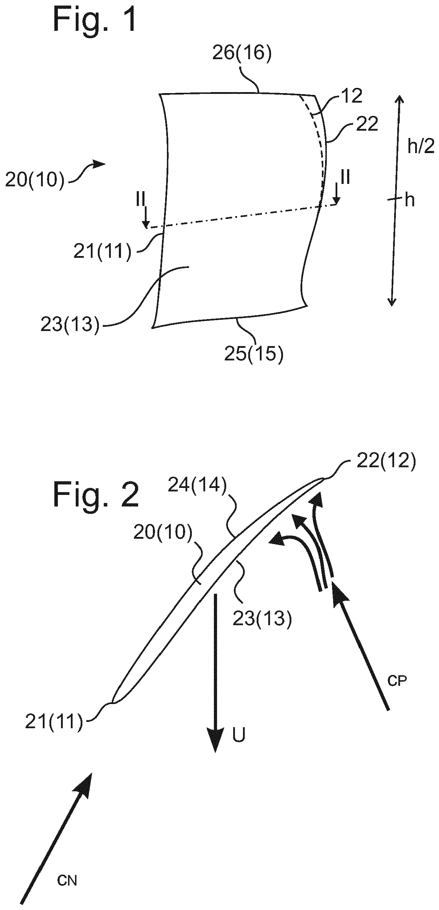

Fig. 1 zeigt einerseits (ausgezogen) ein Schaufelblatt einer zweiten Schaufel 20 eines Schaufelgitters eines Verdichters einer Flugtriebwerk-Gasturbine nach einer Ausführung der vorliegenden Erfindung in einer perspektivischen Ansicht entgegen einer Umfangs- bzw. Rotationsrichtung U (vgl. Fig. 2), und zur Verdeutlichung darübergelegt bzw. in Umfangsrichtung hineingedreht (strichliert) ein Schaufelblatt einer benachbarten ersten Schaufel 10 des Schaufelgitters, deren Merkmale durch Bezugszeichen in Klammern identifiziert sind. Erste und zweite Schaufeln sind in Umfangsrichtung abwechselnd angeordnet. Sie können Lauf- oder Leitschaufeln sein, das Schaufelgitter entsprechend ein Lauf- bzw. Leitgitter.

Die ersten und zweiten Schaufeln 10 bzw. 20 weisen jeweils eine einem Gasturbineneintritt (links in Fig. 1, 2) zugewandte Vorderkante 11 bzw. 21, eine dem Gasturbineneintritt abgewandte Hinterkante 12 bzw. 22, eine diese verbindende, in Betriebsrotationsrichtung U vordere Druckseite 13 bzw. 23, eine dieser gegenüberliegende Saugseite 14 bzw. 24 (vgl. Fig. 2) und längs einer Fädelachse aufeinanderfolgende Profilsehnen auf und erstrecken sich radial (von unten nach oben in Fig. 1) zwischen einem rotorzugewandten Schaufelfuß 15 bzw. 25 und einer rotorabgewandten Schaufelspitze 16 bzw. 26.

In Fig. 2 ist zudem eine normale Anströmung c_{N} der Schaufelvorderkanten sowie eine Rückströmung c_{P} angedeutet, wie sie bei einem Pumpen des Verdichters auftritt. Man erkennt an den eingezeichneten Stromlinien, dass ein Staupunkt bei dieser Rückströmung in der axial hinteren (rechts in Fig. 1, 2), radial oberen (oben in Fig. 1) Hälfte der Druckseiten auftritt.

Die Hinterkanten 12 der ersten Schaufeln 10 (strichliert in Fig. 1) sind in einer schaufelspitzenzugewandten (in Fig. 1 oberen) Hälfte über die Schaufelhöhe h streng monoton zunehmend gegenüber den Hinterkanten 22 der zweiten Schaufel 20 axial zur Vorderkante hin (nach links in Fig. 1) versetzt, wobei der (maximale) Versatz an der Schaufelspitze wenigstens 0,5% und höchstens 15% der Länge der Profilsehne an der Schaufelspitze beträgt. Man erkennt in Fig. 1, dass der Versatz sich zwischen 50% und 100% der Schaufelhöhe h, gemessen vom Rotor bzw. Schaufelfuß aus, erstreckt, d.h. in der oberen, über der Schnittlinie II-II liegenden Hälfte h/2.

Hierdurch kann bei pumpenbedingter Rückströmung c_{P} ein Flattern der Schaufeln 10, 20 reduziert, vorzugsweis verhindert werden.

Zusätzlich weisen die entsprechend aerodynamisch weniger belasteten ersten Schaufeln eine andere Biege- und Torsionssteifigkeit auf als die zweiten Schaufeln, so dass ihre, insbesondere ersten, Biege- und Torsionseigenfrequenzen verschieden sind und so die durch den Rückschnitt der Hinterkanten bereits aerodynamisch verstimmten Schaufeln zusätzlich auch strukturell verstimmen.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10(20): erste(zweite) Schaufel
- 11(21): Vorderkante
- 12(22): Hinterkante
- 13(23): Druckseite
- 14(24): Saugseite
- 15(25): Schaufelfuß
- 16(26): Schaufelspitze

## Patentansprüche

1. Schaufelgitter, insbesondere Lauf- oder Leitgitter, für einen Verdichter einer Gasturbine, mit wenigstens einer ersten Schaufel (10) und wenigstens einer hiervon verschiedenen zweiten Schaufel (20), die jeweils eine einem Gasturbineneintritt zugewandte Vorderkante (11; 21), eine dem Gasturbinaneintritt abgewandte Hinterkante (12; 22), eine diese verbindende, in Betriebsrotationsrichtung (U) vordere Druckseite (13; 23), eine dieser gegenüberliegende Saugseite (14; 24) und längs einer Fädelachse aufeinanderfolgende Profilsehnen aufweisen, die sich zwischen einem Schaufelfuß (15; 25) und einer Schaufelspitze (16; 26) erstrecken, und weiterhin die Hinterkante (12) der ersten Schaufel (10) wenigstens in einer schaufelspitzenzugewandten Hälfte (h/2) gegenüber der Hinterkante (22) der zweiten Schaufel (20) wenigstens abschnitttsweise axial zur Vorderkante (11; 21) hin versetzt ist, **dadurch gekennzeichnet, dass** eine Hinterkante wenigstens einer dritten Schaufel gegenüber den Hinterkanten der ersten und der zweiten Schaufel wenigstens abschnitttsweise axial zur Vorderkante hin versetzt ist.

2. Schaufelgitter nach dem vorhergehenden Anspruch, **dadurch gekennzeichnet, dass** die Hinterkante der ersten Schaufel in einem schaufelspitzenzugewandten Drittel gegenüber der Hinterkante einer oder beider benachbarter Schaufeln wenigstens abschnitttsweise axial zur Vorderkante hin versetzt sind.

3. Schaufelgitter nach einem der vorhergehenden Ansprüche, **dadurch gekennzeichnet, dass** die Hinterkante der ersten Schaufel gegenüber der Hinterkante der zweiten Schaufel wenigstens abschnitttsweise um wenigstens 0,5% und/oder höchstens 15% einer Profilsehnenlänge versetzt ist.

4. Schaufelgitter nach einem der vorhergehenden Ansprüche, **dadurch gekennzeichnet, dass** die Hinterkante der ersten Schaufel gegenüber der Hinterkante der zweiten Schaufel zur Schaufelspitze hin, insbesondere monoton, zunehmend versetzt ist.

5. Schaufelgitter nach einem der vorhergehenden Ansprüche, **dadurch gekennzeichnet, dass** die erste und zweite Schaufel, insbesondere um wenigstens 1% und/oder höchstens 20%, unterschiedliche, insbesondere erste, zweite und/oder höhere und/oder Biege- und/oder Torsions-, Eigenfrequenzen aufweisen.

6. Schaufelgitter nach einem der vorhergehenden Ansprüche, **dadurch gekennzeichnet, dass** die erste Schaufel, insbesondere wenigstens in der hinterkanten- und schaufelspitzenzugewandten Hälfte, eine andere, insbesondere geringere, Biege- und/oder Torsionssteifigkeit aufweist als die zweite Schaufel.

7. Gasturbine, insbesondere Flugtriebwerk-Gasturbine, mit wenigstens einer, insbesondere Hochdruck-, Verdichterstufe mit einem Schaufelgitter nach einem der vorhergehenden Ansprüche.

8. Verfahren zum Auslegen eines Schaufelgitters nach einem der vorhergehenden Ansprüche, wobei die Hinterkante der ersten Schaufel in einer schaufelspitzenzugewandten Hälfte gegenüber der Hinterkante der zweiten Schaufel wenigstens abschnittsweise axial zur Vorderkante hin versetzt wird, **dadurch gekennzeichnet, dass** eine Hinterkante wenigstens einer dritten Schaufel gegenüber den Hinterkanten der ersten und zweiten Schaufeln wenigstens abschnittsweise axial zur Vorderkante hin versetzt wird.

## Claims

1. An array of flow-directing elements, in particular a rotor vane or stator vane array, for a compressor of a gas turbine, having at least one first flow-directing element (10), and at least one second flow-directing element (20) different therefrom, each having a leading edge facing a gas turbine inlet (11; 21), a trailing edge (12; 22) facing away from the gas turbine inlet, a pressure side (13; 23) connecting them in the direction of operational rotation (U), a suction side (14; 24) located opposite therefrom, as well as successive chords along a stacking axis, that extend radially between an airfoil (15; 25) and an airfoil tip (16; 26), and furthermore the trailing edge (12) of the first flow-directing element is, at least in a portion thereof (h/2), axially offset from the trailing edge (22) of the second flow-directing element (20) in a direction toward the leading edge (11; 21), **characterized in that** a trailing edge, at least in a portion thereof, is axially offset from the trailing edges of the first or second flow-directing elements in a direction toward the leading edge.

2. An array of flow-directing elements according to the previous claim, **characterized in that** the trailing edge of the first flow-directing element in a third facing the airfoil tip is axially offset at least in portions from the trailing edge of one or both proximate flow-directing elements.

3. An array of flow-directing elements according to the previous claims, **characterized in that** the trailing edge of the first flow-directing element is offset from the trailing edge of the second flow-directing element at least in portions by at least 0.5% and/or at most 15% of a chord length.

4. An array of flow-directing elements according to the previous claims, **characterized in that** the trailing edge of the first flow-directing element is offset from the trailing edge of the second flow-directing element in the direction of the airfoil tip, in particular in a monotonically increasing fashion.

5. An array of flow-directing elements according to the previous claims, **characterized in that** the first and second flow-directing elements have different natural frequencies differing by at least 1% and/or at most 20%, in particular first, second, and/or higher and/or bending or torsional natural frequencies.

6. An array of flow-directing elements according to the previous claims, **characterized in that** the first flow-directing element, in particular at least in the half facing the trailing edge and the airfoil have different, in particular lower bending stiffness and/or torsional stiffness than the second flow-directing element.

7. A gas turbine, in particular an aircraft engine gas turbine, having at least one in particular high-pressure compression stage with an array of flow-directing elements according to one of the previous claims.

8. Method for designing an array of flow-directing elements according to one of the preceding claims wherein the trailing edge of the first flow-directing element, in a half facing the airfoil tip, is axially displaced from the trailing edge of the second flow-directing element at least in portions in the direction of the leading edge, **characterized in that** a trailing edge of at least a third flow-directing element is axially displaced from the trailing edges of the first and second flow-directing elements at least in portions in the direction of the leading edge.

## Revendications

1. Réseau d'aubes, en particulier réseau mobile ou réseau directeur, pour un compresseur d'une turbine à gaz, comprenant au moins une première aube (10) et au moins une deuxième aube (20) séparée de celle-ci, qui présentent respectivement un bord d'attaque (11 ; 21) tourné vers une entrée de la turbine à gaz, un bord de fuite (12 ; 22) opposé à l'entrée de la turbine à gaz, un intrados avant (13 ; 23) raccordant celui-ci dans le sens de rotation de marche (U), un extrados (14 ; 24) opposé à celui-ci et des cordes de profil successives le long d'un axe d'enfilement, qui s'étendent entre une emplanture d'aube (15 ; 25) et un embout d'aube (16 ; 26), et, en outre, le bord de fuite (12) de la première aube (10) est décalé au moins sur une moitié (h/2) tournée vers l'embout d'aube par rapport au bord de fuite (22) de la deuxième aube (20) au moins par sections axialement sur le bord d'attaque (11 ; 21), **caractérisé en ce qu**'un bord de fuite d'au moins une troisième aube est décalé par rapport aux bords de fuite de la première et de la deuxième aube au moins par sections axialement sur le bord d'attaque.

2. Réseau d'aubes selon la revendication précédente, **caractérisé en ce que** le bord de fuite de la première aube est décalé sur un tiers tourné vers l'embout d'aube par rapport au bord de fuite d'une ou des deux aubes voisines au moins par sections axialement sur le bord d'attaque.

3. Réseau d'aubes selon l'une quelconque des revendications précédentes, **caractérisé en ce que** le bord de fuite de la première aube est décalé par rapport au bord de fuite de la deuxième aube au moins par sections d'au moins 0,5 % et/ou au maximum de 15 % d'une longueur du profil d'aile.

4. Réseau d'aubes selon l'une quelconque des revendications précédentes, **caractérisé en ce que** le bord de fuite de la première aube par rapport au bord de fuite de la deuxième aube est de plus en plus décalé par rapport à l'embout d'aube, en particulier de manière monotone.

5. Réseau d'aubes selon l'une quelconque des revendications précédentes, **caractérisé en ce que** la première et la deuxième aube présentent des fréquences propres au moins de 1 % et/ou au maximum de 20 %, en particulier une, deux et/ou plus, et/ou des fréquences propres de flexion et/ou de torsion différentes.

6. Réseau d'aubes selon l'une quelconque des revendications précédentes, **caractérisé en ce que** la première aube présente, en particulier au moins dans les moitiés de bords de fuite et tournées vers les embouts d'aubes, une autre rigidité à la flexion et/ou à la torsion, en particulier plus faible, que la deuxième aube.

7. Turbine à gaz, en particulier turbine à gaz pour groupe motopropulseur, présentant au moins un étage de compresseur, en particulier à haute pression, avec un réseau d'aubes selon l'une quelconque des revendications précédentes.

8. Procédé d'installation d'un réseau d'aubes selon l'une quelconque des revendications précédentes, dans lequel le bord de fuite de la première aube est décalé dans une moitié tournée vers l'embout d'aube par rapport au bord de fuite de la deuxième aube au moins par sections axialement sur le bord d'attaque, **caractérisé en ce qu'**un bord de fuite d'au moins une troisième aube est décalé par rapport aux bords de fuite de la première et de la deuxième aube au moins par sections axialement sur le bord d'attaque.
